# EUROPÄISCHE PATENTSCHRIFT

(11) **EP 2 719 578 B1**
(45) Veröffentlichungstag und Bekanntmachung des Hinweises auf die Patenterteilung: **03.01.2018**
(21) Anmeldenummer: 13004871.3
(22) Anmeldetag: 10.10.2013
(51) Int. Cl.: B60P 3/40

(54) **Kupplungsanordnung sowie ein Schwerlast-Transportfahrzeug mit einer derartigen Kupplungsanordnung**
Coupling assembly and a heavy duty transport vehicle with such a coupling assembly
Agencement de couplage et poids-lourd doté d'un tel agencement de couplage

(30) Priorität: 15.10.2012 DE 102012020233; 15.10.2012 DE 202012009855 U
(43) Veröffentlichungstag der Anmeldung: 16.04.2014
(73) Patentinhaber: Scheuerle Fahrzeugfabrik GmbH, 74629 Pfedelbach (DE)
(72) Erfinder: Kolb, Joachim, 74629 Pfedelbach (DE); Sommer, Dieter, 74629 Pfedelbach (DE)
(74) Vertreter: Leitner, Waldemar

(56) Entgegenhaltungen:
- WO-A1-2006/000230
- DE-A1-102010 003 694
- DE-U1-202010 015 762

## Beschreibung

Die Erfindung betrifft eine Kupplungsanordnung zum Kuppeln eines mit Schraubenbolzen, Schraubenbohrungen und/oder Durchgangsbohrungen versehenen Endes eines länglichen Objekts, insbesondere eines Rotorblatts einer Windkraftanlage, mit einem Schwerlast-Transportfahrzeug. Die Erfindung betrifft des weiteren ein Schwerlast-Transportfahrzeug zum Transport eines länglichen Objekts, insbesondere eines Rotorblatts einer Windkraftanlage, mit einem Fahrgestell und mit einer Halterung zur Befestigung eines mit Schraubenbolzen, Schraubenbohrungen und/oder Durchgangsbohrungen versehenen Endes des länglichen Objekts.

Aus der DE 10 2010 003 694 A1 ist ein Transportfahrzeug bekannt, welches insbesondere zum Transport von Windenergieanlagen-Rotorblättern und Turmsegmenten dient, Das Transportfahrzeug weist ein Transportgestell mit einem Grundrahmen und einem mit dem Grundrahmen schwenkbar verbundenen Kippstuhl auf. Zwischen dem Grundrahmen und einer ersten Seite des Kippstuhls Ist mindestens ein Hydraulikzylinder vorgesehen, durch den der Kippstuhl relativ zum Grundrahmen verschwenkbar ist. Ferner ist ein Blattadapter zur Aufnahme eines Windenergieanlagen-Rotorblattes oder eines Turmsegments vorgesehen, wobei der Blattadapter entweder an der ersten Seite oder an einer zweiten Seite des Kippstuhls angeordnet ist. Jeder Hydraulikzylinder ist über einen ersten Befestigungspunkt am ersten Teil und über einen zweiten Befestigungspunkt am zweiten Teil des Transportgestells befestigt, wobei Schraubbolzen verwendet werden, welche lösbar ausgebildet sind. Durch Ausfahren und Einziehen der Hydraulikzylinder kann der Winkel zwischen dem Grundrahmen und dem Kippstuhl variiert werden. Der Blattadapter weist eine Vielzahl von kreisförmig angeordneten Löchern auf. Hierdurch kann ein Ende des zu transportierenden Objekts durch entsprechende Schraubverbindungen mit diesem Adapter und somit mit dem Kippstuhl verbunden werden.

Eine Kupplungsanordnung und ein Schwerlast-Transportfahrzeug sind auch aus der DE 10 2009 040 200 A1 des Anmelders bekannt. Das bekannte Transportfahrzeug dient zum Transport eines Rotorblatts, dessen Wurzelende in bekannter Weise mit einem Schraub- oder Endflansch versehen ist, der zur Montage des Rotorblatts an einer Nabe einer Windkraftanlage dient. Zum Transport des Rotorblatts wird das Wurzelende an einer auf dem Fahrgestell des Transportfahrzeugs montierten Halterung entweder festgeschraubt oder festgeklemmt. Im zuerst genannten Fall weist die Halterung mindestens einen Kranz von Durchgangsbohrungen auf, die ein entsprechendes Lochbild wie die Schraubenbolzen, Schraubenbohrungen und/oder Durchgangsbohrungen des Schraub- oder Endflanschs aufweisen, so dass das Rotorblatt an der Halterung in der gleichen Weise wie an der Nabe befestigt werden kann. Im zuletzt genannten Fall ist die Halterung mit einer Klemmanordnung versehen, in welcher der Schraub- oder Endflansch am Wurzelende des Rotorblatts festgeklemmt werden kann.

Im zuerst genannten Fall wird als nachteilig angesehen, dass zur Montage des Wurzelendes des Rotorblatts an der Halterung relativ viel Zeit benötigt wird, da es einerseits in Anbetracht des hohen Gewichts des Rotorblatts nicht einfach ist, die Schraubenbolzen, Schraubenbohrungen oder Durchgangsbohrungen im Schraub- oder Endflansch und die Durchgangsbohrungen in der Halterung zur Fluchtung zu bringen und andererseits das Verschrauben selbst ebenfalls sehr zeitaufwändig ist. Entsprechend wird auch für die Demontage relativ viel Zeit benötigt. Während dieser langen Montage- bzw. Demontagezeit muss zum einen das Schwerlast-Transportfahrzeug und zum anderen ein Kran zum Anheben des Rotorblatts bereitgestellt werden, was einen sehr hohen Aufwand verursacht.

Im zuletzt genannten Fall wird als nachteilig angesehen, dass der Schraub- oder Endflansch am Wurzelende des Rotorblatts nicht dazu ausgelegt ist, in einer Klemmanordnung festgeklemmt zu werden, so dass insbesondere dann eine Beschädigung des Schraub- oder Endflanschs nicht ausgeschlossen werden kann, wenn die Halterung und das daran befestigte Rotorblatt wie bei dem Schwerlast-Transportfahrzeug aus der DE 10 2009 040 200 A1 um eine Querachse des Fahrzeugs verschwenkt werden kann, um zur Verbesserung der Manövrierfähigkeit des Transportfahrzeugs, insbesondere beim Durchfahren enger Kurven, das Spitzenende des Rotorblatts anzuheben, was jedoch zu einer erheblichen Belastung des festgeklemmten Endflanschs führt.

Da Rotorblätter von Windkraftanlagen in der Regel eine in Bezug zu ihrer Längsmittelachse ungleichmäßige Gewichtsverteilung besitzen, hängt diese Belastung zudem von der jeweiligen Drehlage des Rotorblatts ab, in der dieses an der Halterung befestigt wird. Selbst bei optimaler Drehlage des Rotorblatts auf dem Transportfahrzeug kann der Schwerpunkt des Rotorblatts in Draufsicht einen seitlichen Abstand von der vertikalen Längsmittelebene des Transportfahrzeugs oder Fahrgestells aufweisen, wenn die Längsmittelachsen des Rotorblatts und des Transportfahrzeugs oder Fahrgestells bei Geradeausfahrt parallel ausgerichtet sind. Dies führt zu einer ungleichen Gewichtsverteilung auf die Räder und zu einer Reduzierung der Kippstabilität.

Eine weitere Verbesserung der Manövrierfähigkeit kann bei dem bekannten Transportfahrzeug dadurch erreicht werden, dass die Schwenkeinrichtung mit der Halterung in Bezug zum Fahrgestell um eine Hochachse des Transportfahrzeugs drehbar ist, so dass sich das Rotorblatt in einer zur Fahrbahnoberfläche parallelen Ebene in Bezug zu einer vertikalen Längsmittelebene des Transportfahrzeugs oder des Fahrgestells in seitlicher Richtung, das heißt quer zur Längsmittelachse, verschwenken lässt, so dass die Längsmittelachse des Rotorblatts einen Winkel mit der vertikalen Längsmittelebene des Transportfahrzeugs oder des Fahrgestells einschließt.

Wenn das Fahrgestell relativ kurz ist, wie bei dem bekannten Transportfahrzeug, so dass das Spitzenende des Rotorblatts weit über das benachbarte Ende des Fahrgestells hinaus ragt, wird sich auch bei einem seitlichen Verschwenken des Rotorblatts dessen Schwerpunkt von der vertikalen Längsmittelebene des Transportfahrzeugs oder des Fahrgestells weg bewegen, was ebenfalls zu einer Reduzierung der Kippstabilität und zu einer ungleichmäßigen Gewichtsverteilung auf die Räder führt.

Aus der DE 10 2010 042 783 A1 ist es bei einer Kupplungsanordnung zum Kuppeln eines mit Schraubenbolzen versehenen Endes eines schwenkbaren länglichen Objekts in Form eines Rotorblatts einer Windkraftanlage mit einem Schwerlast-Transportfahrzeug bereits an sich bekannt, einen schwenkbaren Kippstuhl vorzusehen, der einen Adapter mit einer Vielzahl von kreisförmig angeordneten Löchern aufweisen kann, wobei der Durchmesser der Kreise unterschiedlich sein kann, so dass auch unterschiedliche Rotorblätter mit unterschiedlichen Durchmessern an dem Adapter befestigt werden können.

In der DE 20 2012 002 143 U1 ist es ebenfalls bei einem Transportfahrzeug für ein längliches Objekt in Form eines Rotorblatts einer Windkraftanlage bereits an sich bekannt, am Transportfahrzeug eine kippbare Halterung vorzusehen, an der sich das Wurzelende des Rotorblatts lösbar befestigen lässt.

Ausgehend hiervon liegt der Erfindung die Aufgabe zugrunde, eine Kupplungsanordnung und ein Schwerlast-Transportfahrzeug der eingangs genannten Art dahingehend zu verbessern, dass die Montage und Demontage des länglichen Objekts ohne die Gefahr einer Beschädigung des Objekts beschleunigt werden kann. Dabei sollen vorzugsweise eine Reduzierung der Kippstabilität und eine ungleichmäßige Lastverteilung auf die Räder vermieden werden. Des weiteren soll sich die erfindungsgemäße Kupplungsanordnung vorzugsweise nicht nur für Transportfahrzeuge mit einer starren Fixierung des länglichen Objekts, sondern auch für Transportfahrzeuge eignen, bei denen zur Verbesserung der Manövrierfähigkeit das längliche Objekt im Bezug zum Fahrgestell schwenkbar oder in anderer Weise beweglich ist.

Diese Aufgabe wird erfindungsgemäß durch eine Kupplungsanordnung gemäß Anspruch 1 sowie ein Schwerlast-Transportfahrzeug gemäß Anspruch 11 gelöst.

Zur Lösung dieser Aufgabe wird erfindungsgemäß vorgeschlagen, dass die Kupplungsanordnung zum Kuppeln eines mit Schraubbolzen, Schraubbohrungen und/oder Durchgangsbohrungen versehenen Endes eines länglichen Objekts mit einem Schwerlast-Transportfahrzeug ein mit dem Ende des länglichen Objekts verschraubbares Kupplungselement und eine am Schwerlast-Transportfahrzeug angebrachte, lösbar mit dem Kupplungselement kuppelbare Kupplungseinrichtung aufweist, wobei die Kupplungseinrichtung eine Mehrzahl von beweglichen Kupplungsbolzen umfasst, die sich nach einer gegenseitigen Annäherung des Kupplungselements und der Kupplungseinrichtung formschlüssig durch Augen des Kupplungselements und der Kupplungseinrichtung hindurch bewegen lassen, und dass das Kupplungselement einen mit dem Ende des länglichen Objekts verschraubbaren Schraubflansch und mehrere starr mit dem Schraubflansch verbundene Vorsprünge umfasst, in denen jeweils eines der Augen angeordnet ist, und dass die Kupplungseinrichtung mehrere auf die Kupplungsbolzen einwirkende Stellorgane umfasst,,

Durch die erfindungsgemäße Merkmalskombination kann das zusätzlich vorgesehene Kupplungselement bereits vor dem Transport des länglichen Objekts unter Verwendung der Schraubenbolzen, Schraubenbohrungen oder Durchgangsbohrungen am Ende des länglichen Objekts festgeschraubt werden. Zum Festschrauben des Kupplungselements muss weder das Schwerlast-Transportfahrzeug noch ein zum Anheben des länglichen Objekts geeigneter Kran bereitgestellt werden, sondern lediglich ein Kran zum Anheben des sehr viel leichteren Kupplungselements. Weiter kann durch die erfindungsgemäße Merkmalskombination eine Beschädigung des mit den Schraubenbolzen, Schraubenbohrungen oder Durchgangsbohrungen versehenen Endes des länglichen Objekts bei der Montage, beim Transport und bei der Demontage vermieden werden, da zum einen das Ende des länglichen Objekts nie in direkten Kontakt mit dem Transportfahrzeug gelangt und zum anderen die bei der Montage, beim Transport und bei der Demontage in das Ende des länglichen Objekts eingeleiteten Kräfte in derselben Weise wie im bestimmungsgemäßen Gebrauch in das längliche Objekt eingeleitet werden. Auf der anderen Seite kann die Montage des längliche Objekts auf dem Schwerlast-Transportfahrzeug beträchtlich beschleunigt werden, da sowohl die gegenseitige Ausrichtung des Kupplungselements und der Kupplungseinrichtung als auch das Kuppeln des Kupplungselements mit der Kupplungseinrichtung erheblich weniger Zeit benötigen als die entsprechenden Vorgänge beim Herstellen einer Schraubverbindung.

Die Kupplungseinrichtung umfasst mehrere bewegliche Kupplungsbolzen, die sich nach einer gegenseitigen Annäherung des Kupplungselements und der Kupplungseinrichtung formschlüssig durch Augen des Kupplungselements hindurch bewegen lassen. Das Kupplungselement umfasst einen mit Durchgangsbohrungen versehenen Schraubflansch, da sich ein solcher Schraubflansch sowohl mit einem Schraub- oder Endflansch als auch mit einem Kranz von axialen Schraubenbolzen, Gewindebohrungen oder Durchgangsbohrungen am Wurzelende des Rotorblatts verschrauben lässt. Darüber hinaus umfasst das Kupplungselement vorteilhaft mehrere starr mit dem Schraubflansch verbundene Vorsprünge oder Kupplungslaschen, in denen jeweils eines der zur Aufnahme der Kupplungsbolzen dienenden Augen angeordnet ist.

Eine vorteilhafte Weiterbildung der Erfindung sieht vor, dass zum Bewegen der Kupplungsbolzen die am Transportfahrzeug angebrachte Kupplungseinrichtung zweckmäßig mehrere auf die Kupplungsbolzen einwirkende Stellorgane aufweist. Bei den Stellorganen handelt es sich gemäß einer weiteren vorteilhaften Weiterbildung der Erfindung um hydraulische Kupplungszylinder, deren Kolbenstangen oder Zylinderrohre jeweils starr mit einem der Kupplungsbolzen verbunden sind oder einen der Kupplungsbolzen bilden, da auf diese Weise bei geringem Platzbedarf die im Transportfahrzeug vorhandene Hydraulik genutzt werden kann. Jedoch können alternativ auch andere Stellorgane, wie elektrische Stellmotoren oder Getriebemotoren, eingesetzt werden.

Insbesondere dann, wenn das Transportfahrzeug zum Transport eines Rotorblatts einer Windkraftanlage eingesetzt wird,

Eine weitere vorteilhafte Weiterbildung der Erfindung sieht vor, dass - um den Platzbedarf der Kupplungseinrichtung gering zu halten, so dass diese nicht über den äußeren Umfang des länglichen Objekts übersteht - die Vorsprünge oder Kupplungslaschen vorteilhaft in Richtung der Längsmittelachse des länglichen Objekts über eine vom länglichen Objekt abgewandte Breitseite des Schraubflanschs überstehen, wobei die Augen in Bezug zu der Längsmittelachse des länglichen Objekts vorzugsweise in gleichen Winkelabständen um die Längsmittelachse herum angeordnet sind, um für eine gleichmäßige Kraftübertragung entlang des Umfangs des länglichen Objekts zu sorgen. Die Augen können zweckmäßig entweder radial oder parallel ausgerichtet sein.

Die Vorsprünge oder Kupplungslaschen sind so angeordnet, dass sie sich bei der gegenseitigen Annäherung des Kupplungselements und des Transportfahrzeugs jeweils mit komplementären Vorsprüngen oder Kupplungslaschen verzahnen, die starr über eine die Kupplungseinrichtung tragende Halterung des Transportfahrzeugs überstehen, wenn die Längsmittelachse des länglichen Objekts mit der Mitte der Halterung fluchtet. Die nebeneinander an der Halterung befestigten Vorsprünge oder Kupplungslaschen weisen mindestens teilweise ebenfalls Augen auf, die beim Kuppeln mit den Augen in den Vorsprüngen oder Kupplungslaschen des Kupplungselements fluchten. Nach dem Kuppeln erstreckt sich bevorzugt mindestens ein Teil der Kupplungsbolzen durch die Augen von insgesamt drei, vier oder fünf Vorsprüngen oder Kupplungslaschen, von denen ein Teil an der Halterung und ein Teil am Kupplungselement angebracht sind. Auf diese Weise ist bei relativ geringem Platzbedarf eine Übertragung von großen Kräften vom länglichen Objekt auf die Halterung des Transportfahrzeugs möglich.
Um die beim Kuppeln erforderliche Positioniergenauigkeit zu verringern, kann ein Teil der Vorsprünge oder Kupplungslaschen der Halterung mit einer randoffenen Aufnahmevertiefung versehen werden, die divergierende Begrenzungsflächen aufweist. Die Aufnahmevertiefungen sind bevorzugt nach oben offen und an einem Teil der Vorsprünge oder Kupplungslaschen der Kupplungseinrichtung vorgesehen, können jedoch auch nach unten offen und an einem Teil der Vorsprünge oder Kupplungslaschen des Kupplungselements vorgesehen sein, zweckmäßig an oberen Vorsprüngen oder Kupplungslaschen. Auf diese Weisen lassen sich Kupplungsbolzen, die zuvor in Augen von komplementären Vorsprüngen oder Kupplungslaschen eingesetzt worden sind, leicht in die Aufnahmevertiefungen einführen. Anschließend kann das am Rotorblatt befestigte Kupplungselement verschwenkt werden, um weitere Vorsprünge oder Kupplungslaschen des Kupplungselements und der Kupplungseinrichtung in gegenseitigen Eingriff zu bringen und um dann zum endgültigen Kuppeln weitere Kupplungsbolzen durch fluchtende Augen der weiteren Vorsprünge oder Kupplungslaschen einzuführen.

Für den Fall, dass gerade kein Kupplungselement verfügbar ist, ist die Halterung zusätzlich zur Kupplungseinrichtung mit mindestens einem Kranz von Durchgangsbohrungen versehen, die bezogen auf die Längsmittelachse des länglichen Objekts zweckmäßig entweder radial auswärts oder radial einwärts von der Kupplungseinrichtung angeordnet sind und zum Verschrauben mit den Schraubenbolzen, Gewindebohrungen und/oder Durchgangsbohrungen am Ende des länglichen Objekts dienen können.

Um die Manövrierfähigkeit des Transportfahrzeugs insbesondere beim Durchfahren enger Kurven zu verbessern, ist die Halterung vorteilhaft mittels einer Schwenkeinrichtung um eine Querachse des Transportfahrzeugs verschwenkbar, so dass ein freies Ende des länglichen Objekts bei Bedarf durch Verschwenken der Halterung angehoben werden kann.

Zur Kompensation des Gewichts des länglichen Objekts beim Verschwenken und/oder zur Verbesserung der Kippstabilität und Lastverteilung ist vorteilhaft ein Gegengewicht auf der vom länglichen Objekt abgewandten Seite der Halterung angeordnet.

Das Gegengewicht kann starr mit der Halterung verbunden sein, ist jedoch vorzugsweise in Bezug zur Halterung beweglich. Durch das zuletzt genannte Merkmal kann das Gegengewicht aus dem Schwenkweg der Halterung heraus bewegt werden, was eine Vergrößerung der Abmessungen und damit auch der Masse des Gegengewichts erlaubt. Weiter kann der Hebelarm des Gegengewichts zum Beispiel in Abhängigkeit vom Gewicht des länglichen Objekts oder von dessen Schwenkwinkel in einer zur Fahrbahnoberfläche parallelen Ebene verlängert oder verkürzt werden, wodurch die Schwerpunktslage des Transportfahrzeugs vorteilhaft beeinflusst und damit die Kippstabilität verbessert werden kann.

Vorteilhaft ist das Transportfahrzeug mit Einrichtungen ausgestattet, mit deren Hilfe sich das Gegengewicht parallel zu einer Längsmittelachse des an der Halterung befestigten länglichen Objekts verschieben lässt, zum Beispiel um das vom Gegengewicht ausgeübte Moment zu vergrößern oder zu verkleinern und/oder um das Gegengewicht zum Verschwenken der Halterung aus deren Schwenkweg heraus zu bewegen.

Weiter kann das Transportfahrzeug auch mit Einrichtungen ausgestattet sein, mit deren Hilfe sich das Gegengewicht senkrecht zu einer Längsmittelachse des an der Halterung befestigten länglichen Objekts bewegen lässt. Auf diese Weise kann der Schwerpunkt des Gegengewichts in Bezug zur vertikalen Längsmittelebene des Fahrgestells bzw. des Transportfahrzeugs nach einer Seite hin bewegt werden, zum Beispiel um eine ungleichförmige Gewichtsverteilung des Rotorblatts in Bezug zu dessen Längsmittelachse und/oder in Bezug zum Fahrgestell auszugleichen und dadurch ebenfalls die Kippstabilität zu verbessern und die Last gleichmäßiger auf alle Räder zu verteilen.

Zweckmäßig sind die beiden zuvor genannten Einrichtungen zum Bewegen des Gegengewichts unabhängig voneinander aktivierbar, so dass das Gegengewicht wahlweise parallel und/oder senkrecht zur Längsmittelachse des an der Halterung befestigten Objekts verschoben werden kann, um den Schwerpunkt des Gegengewichts in Abhängigkeit von der Schwerpunktslage des Objekts in eine optimale Position zu bringen.

Weiter sind die Einrichtungen zum Bewegen des Gegengewichts vorzugsweise auch während der Fahrt aktivierbar, so dass der Schwerpunkt des Gegengewichts zum Beispiel beim Durchfahren einer Kurve verlagert werden kann, zweckmäßig in Abhängigkeit von der Schwerpunktslage des länglichen Objekts, wenn dessen freies Ende beim Durchfahren der Kurve nach einer Seite ausschwenkt oder durch ein Verdrehen der Halterung um die Fahrzeughochachse in seitlicher Richtung verschwenkt wird. Als Fahrzeughochachse wird im Rahmen dieser Patentanmeldung eine zur Fahrbahnoberfläche senkrechte Achse bezeichnet, um die sich die Halterung mit dem daran befestigten länglichen Objekt in einer zur Fahrbahnoberfläche parallelen Ebene verschwenken lässt.

Vorteilhaft sind die Schwenkeinrichtung, die Halterung und das Gegengewicht gemeinsam auf einer Trägereinheit angebracht, die zusammen mit der Halterung, der Schwenkeinrichtung und dem Gegengewicht um die Fahrzeughochachse in Bezug zum Fahrgestell drehbar ist, wobei die Trägereinheit bevorzugt auf einem Drehkranz des Fahrgestells montiert ist.

Im Folgenden wird die Erfindung anhand von drei in der Zeichnung dargestellten Ausführungsformen näher erläutert. Es zeigen:
Fig. 1 eine Seitenansicht eines erfindungsgemäßen Schwerlast-Transportfahrzeugs beim Transport eines Rotorblatts einer Windkraftanlage, wobei das Rotorblatt in zwei verschiedenen vertikalen Schwenkstellungen dargestellt ist;
Fig. 2 eine Oberseitenansicht des Transportfahrzeugs, wobei das Rotorblatt in zwei verschiedenen vertikalen Schwenkstellungen dargestellt ist;
Fig. 3 eine Seitenansicht des Transportfahrzeugs ohne das Rotorblatt;
Fig. 4 eine vergrößerte teilweise weggeschnittene Seitenansicht einer auf dem Transportfahrzeug montierten Trägereinheit mit einer ersten Ausführungsform einer Rotorblatthalterung sowie einer erfindungsgemäßen Kupplungsanordnung ohne das zum Verschrauben mit dem Rotorblatt bestimmte Kupplungselement;
Fig. 5 eine Ansicht entsprechend Fig. 4, jedoch mit dem Kupplungselement und in verschwenktem Zustand der Rotorblatthalterung;
Fig. 6 eine teilweise weggeschnittene Oberseitenansicht der Trägereinheit in einer ersten Position eines Gegengewichts;
Fig. 7 eine teilweise weggeschnittene Oberseitenansicht der Trägereinheit in weiteren Positionen des Gegengewichts;
Fig. 8 eine perspektivische Ansicht der Trägereinheit und der Kupplungsanordnung ohne das Kupplungselement;
Fig. 9 eine Rückseitenansicht des Transportfahrzeugs mit der Trägereinheit und der Kupplungsanordnung ohne das Kupplungselement und das Rotorblatt;
Fig. 10 eine vergrößerte Rückseitenansicht der Trägereinheit und der Kupplungsanordnung ohne das Kupplungselement und das Rotorblatt;
Fig. 11 eine Rückseitenansicht des Transportfahrzeugs mit dem Rotorblatt;
Fig. 12 eine perspektivische Ansicht einer zweiten Ausführungsform einer Rotorblatthalterung sowie einer anderen erfindungsgemäßen Kupplungsanordnung ohne das zum Verschrauben mit dem Rotorblatt bestimmte Kupplungselement;
Fig. 13 eine Seitenansicht der Rotorblatthalterung und der Kupplungsanordnung, jedoch mit dem Kupplungselement;
Fig. 14 eine perspektivische Ansicht der Kupplungsanordnung mit dem Kupplungselement;
Fig. 15 eine perspektivische Ansicht der Kupplungsanordnung ohne das Kupplungselement;
Fig. 16 eine perspektivische Ansicht des Kupplungselements;
Fig. 17 eine andere perspektivische Ansicht des Kupplungselements,
Fig. 18 eine perspektivische Ansicht einer dritten Ausführungsform einer Rotorblatthalterung sowie einer weiteren erfindungsgemäßen Kupplungsanordnung;
Fig. 19 eine Seitenansicht der Rotorblatthalterung und der Kupplungsanordnung;
Fig. 20 eine perspektivische Ansicht der Kupplungsanordnung ohne das Kupplungselement;
Fig. 21 eine Seitenansicht der Kupplungsanordnung ohne das Kupplungselement;
Fig. 22 eine perspektivische Ansicht des Kupplungselements;
Fig. 23 eine andere perspektivische Ansicht des Kupplungselements.

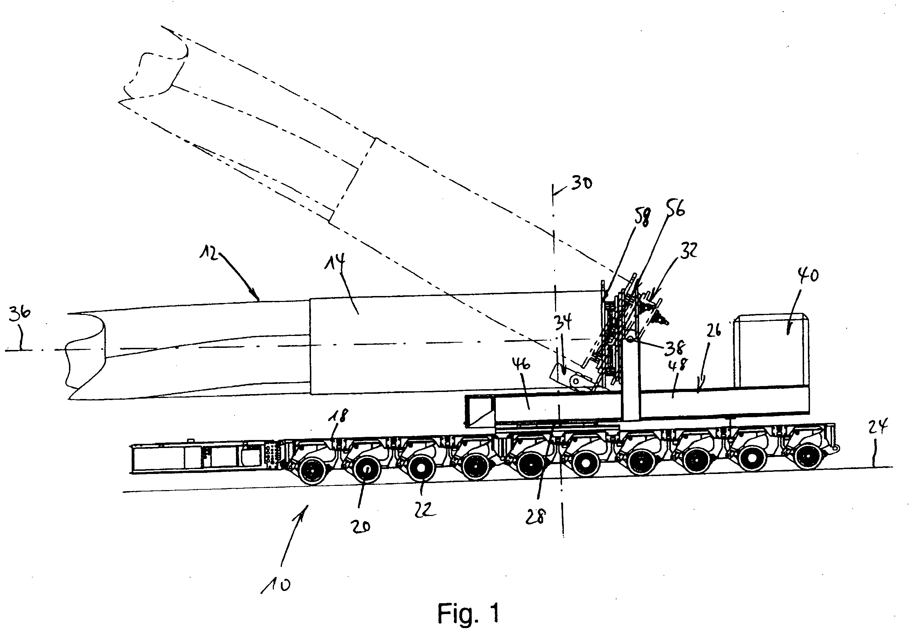

Das in der Zeichnung dargestellte Schwerlast-Transportfahrzeug 10 dient zum Transport eines Rotorblatts 12 für eine Windkraftanlage. Wie am besten in Fig. 1 dargestellt, wird ein Wurzelende 14 des Rotorblatts 12 zum Transport lösbar mit dem Transportfahrzeug 10 verbunden, während das Spitzenende (nicht dargestellt) weit über das benachbarte Ende des Transportfahrzeugs 10 hinausragt, um die Manövrierfähigkeit des Transportfahrzeugs 10 zu verbessern.

Das Transportfahrzeug 10 besteht im Wesentlichen aus einem Fahrgestell 16 oder Fahrwerk mit einem Rahmen 18 und einer Mehrzahl von Radachsen 20, deren Räder 22 auf einer Fahrbahnoberfläche 24 abrollen, einer auf dem Fahrgestell 16 abgestützten Trägereinheit 26 für das Rotorblatt 12, einem zwischen der Trägereinheit 26 und dem Fahrgestell 16 angeordneten Drehkranz 28 zum Drehen der Trägereinheit 26 und des Rotorblatts 12 in Bezug zum Fahrgestell 16 um eine zur Fahrbahnoberfläche 24 senkrechte Fahrzeughochachse 30, einer auf der Trägereinheit 26 montierten schwenkbaren Halterung 32, mit der sich das Wurzelende 14 des Rotorblatts 12 lösbar kuppeln lässt, einer an der Trägereinheit 26 und der Halterung 32 angreifenden Schwenkeinrichtung 34 zum Verschwenken der Halterung 32 und des daran befestigten Rotorblatts 12 um eine zu dessen Längsmittelachse 36 senkrechte und zur Fahrbahnoberfläche 24 parallele Schwenkachse 38, sowie einem auf der Trägereinheit 26 abgestützten Gegengewicht 40, das in Bezug zur Trägereinheit 26, zur Halterung 32 und zum Fahrgestell 16 beweglich ist.

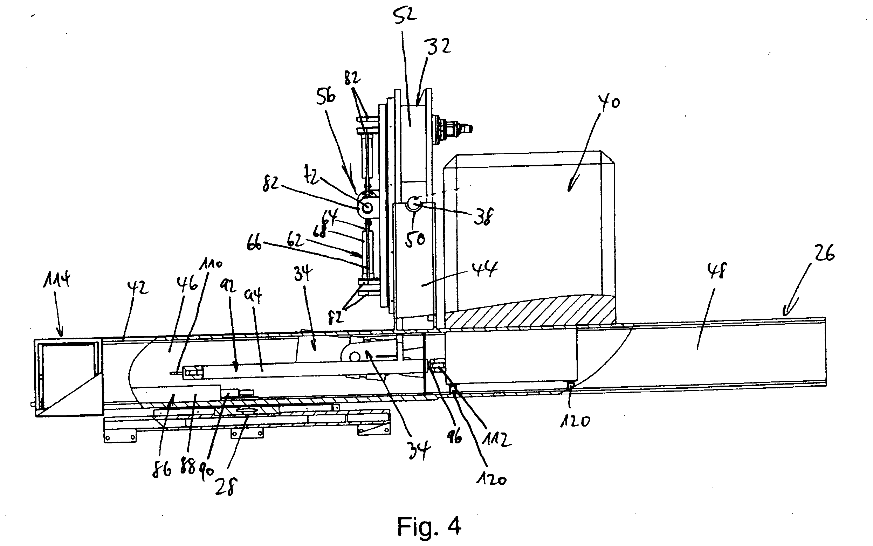

Wie am besten in den Figuren 4 bis 8 und 10 dargestellt, umfasst die Trägereinheit 26 einen zur Oberseite des Fahrgestells 16 und zur Fahrbahnoberfläche 24 parallelen Rahmen 42 und einen etwa in der Mitte des Rahmens 42 senkrecht nach oben über diesen überstehenden Lagerbock 44, an dessen oberem Ende ein Schwenklager 50 für die Halterung 32 angeordnet ist. Der Rahmen 42 umfasst einen ersten Rahmenteil 46, der unterhalb vom Wurzelende 14 des Rotorblatts 12 und oberhalb vom Drehkranz 28 angeordnet ist, sowie einen starr mit dem ersten Rahmenteil 46 und dem Lagerbock 44 verbundenen zweiten Rahmenteil 48, der jenseits des Lagerbocks 44 angeordnet ist und das Gegengewicht 40 aufnimmt.

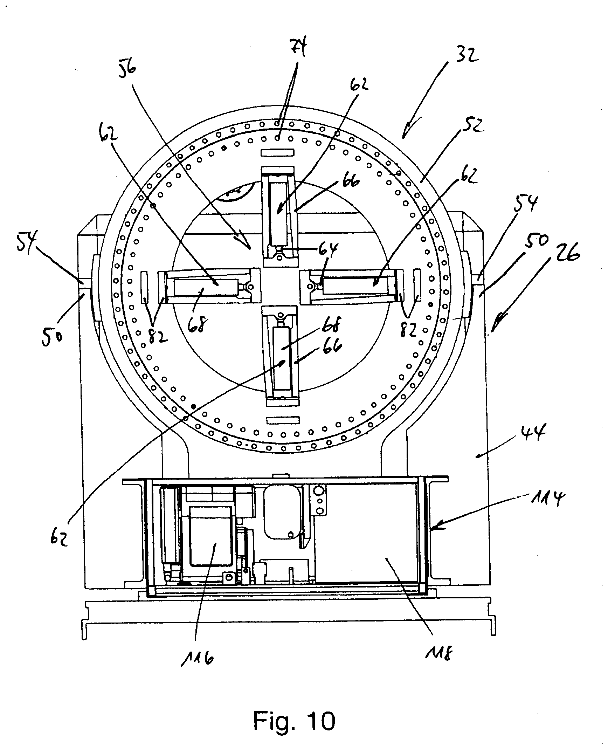

Wie am besten in Fig. 10 dargestellt, umfasst die Halterung 32 einen Trägerring 52, der zwei diametral über seinen äußeren Umfangsrand überstehende und starr mit dem Trägerring 52 verbundene Schwenkzapfen 54 aufweist. Die beiden Schwenkzapfen 54 sind in den Schwenklagern 50 des Lagerbocks 44 drehbar gelagert.

Um die Montage des Wurzelendes 14 des Rotorblatts 12 an der Halterung 32 zu beschleunigen und die Bereitstellungszeit des Schwerlast-Transportfahrzeugs 10 zu reduzieren, wird vor dem Transport des Rotorblatts 12 an dessen Wurzelende 14 ein ringförmiges Kupplungselement 58 festgeschraubt, wie in Fig. 1 dargestellt, das bei der anschließenden Montage an der Halterung 32 relativ schnell mit einer dort angebrachten Kupplungseinrichtung 56 gekuppelt werden kann.

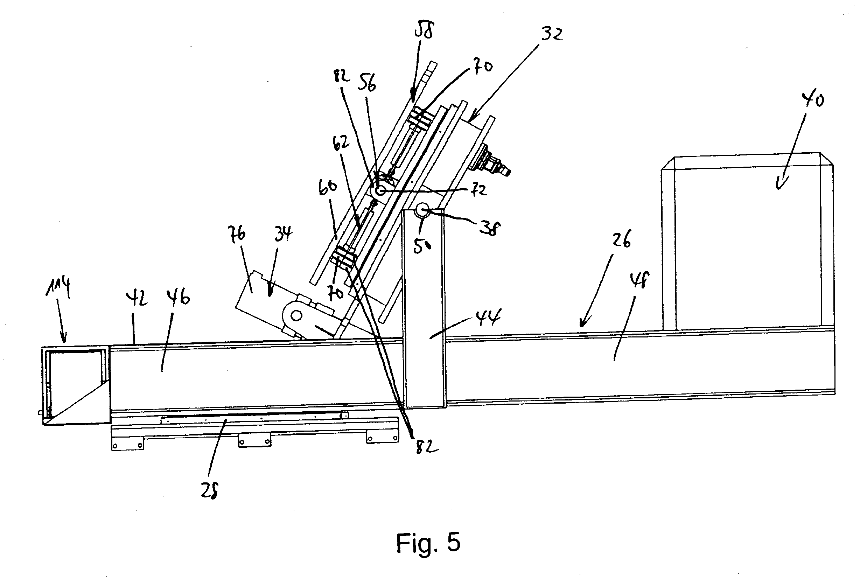

Wie am besten in Fig. 5 dargestellt, weist das Kupplungselement 58 einen ringförmigen Schraubflansch 60 auf, an dem das mit einem Schraub- oder Endflansch bzw. mit einem Kranz von axialen Schraubenbolzen, Gewindebohrungen oder Durchgangsbohrungen versehene Wurzelende 14 des Rotorblatts 12 zum Transport festgeschraubt werden kann. Weiter weist das ringförmige Kupplungselement 58 vier mit dem Schraubflansch 60 verschweißte Kupplungslaschen 70 auf, die jeweils mit einem Auge (nicht sichtbar) versehen sind. Die Kupplungslaschen 70 stehen jeweils paarweise entlang von zwei zueinander senkrechten Durchmessern des ringförmigen Kupplungselements 58 über eine vom Rotorblatt 12 abgewandte ebene Breitseite des Schraubflanschs 60 über, wobei die Kupplungslaschen 70 jeweils den gleichen Abstand von der Mitte des Schraubflanschs 60 aufweisen.

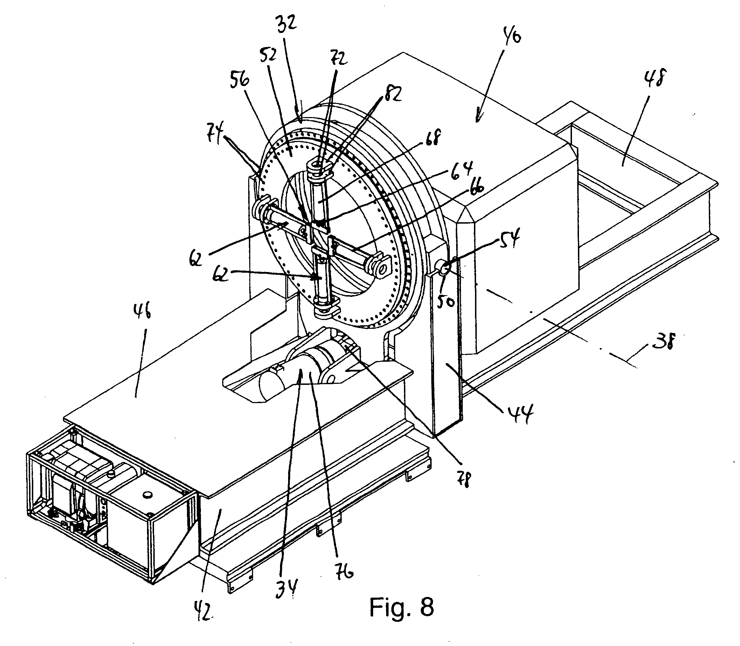

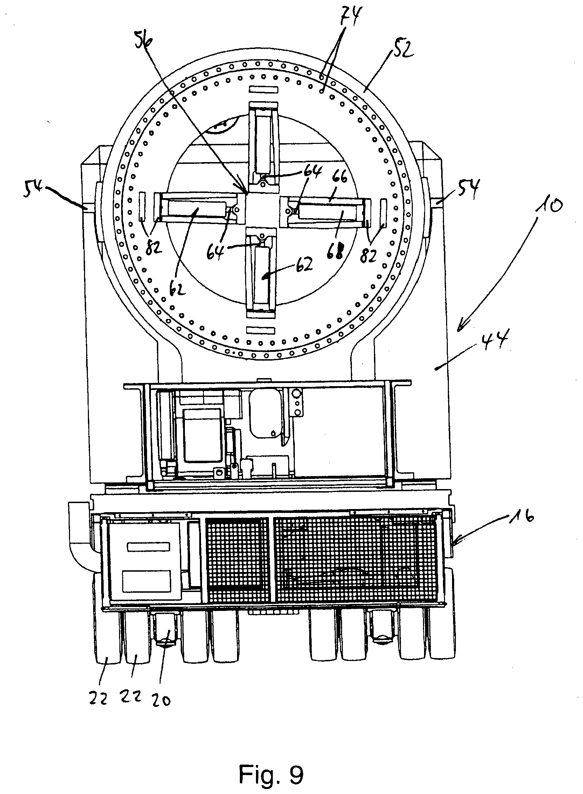

Wie am besten in Fig. 8, 9 und 10 dargestellt, umfasst die an der Halterung 32 angebrachte Kupplungseinrichtung 56 vier radial ausgerichtete Kupplungszylinder 62. Die Kolbenstangen 64 der Kupplungszylinder 62 sind jeweils an einem Joch einer bügelartigen Halterung 66 angelenkt, deren entgegengesetzte Schenkelenden starr mit dem Trägerring 52 verbunden sind. An dem von der Kolbenstange 64 abgewandten Ende des Zylinderrohrs 68 jedes Kupplungszylinders 62 ist ein mit der Längsmittelachse des Kupplungszylinders 62 fluchtender zylindrischer Kupplungsbolzen (nicht sichtbar) starr befestigt, der durch Ausfahren bzw. Einziehen der Kolbenstange 64 in Bezug zum Trägerring 52 radial beweglich ist.

In Bewegungsrichtung der Kolbenstange 64 sind vor jedem Kupplungszylinder 62 auf einer dem Rotorblatt 12 zugewandten Breitseite des Trägerrings 52 zwei Kupplungslaschen 82 am Trägerring 52 festgeschweißt, wobei jeweils eine der beiden Kupplungslaschen 82 unmittelbar vor dem benachbarten Ende des Kupplungszylinders 62 angeordnet und mit den Schenkelenden der bügelartigen Halterung 66 starr verbunden ist. Die beiden Kupplungslaschen 82 weisen einen radialen Abstand auf, der geringfügig größer ist als die Materialstärke von jeder der Kupplungslaschen 70 des mit dem Rotorblatt 12 verschraubten Kupplungselements 58. Die Positionen der vier Paare von Kupplungslaschen 82 auf dem Trägerring 52 sind so gewählt, dass sich zwischen jedes der vier Paare von Kupplungslaschen 82 eine der vier Kupplungslaschen 70 des Kupplungselements 58 einführen lässt, wenn das am Wurzelende 14 des Rotorblatts 12 befestigte Kupplungselement 58 an die Kupplungseinrichtung 56 angenähert wird und dabei so ausgerichtet ist, dass die gegenüberliegenden Stirnseiten des Kupplungselements 58 und des Trägerrings 52 parallel zueinander sind und dass die Längsmittelachse 36 des Rotorblatts 12 durch die Mitte des Trägerrings 52 verläuft. Die beiden Kupplungslaschen 82 jedes Paars weisen jeweils ein Auge 72 auf, dessen Mittelachse mit der Längsmittelachse des benachbarten Kupplungszylinders 62 fluchtet, so dass der am Ende der Kolbenstange 64 befestigte Kupplungsbolzen durch Ausfahren der Kolbenstange 64 durch die Augen 72 der beiden Kupplungslaschen 82 sowie durch das Auge der zwischen die Kupplungslaschen 82 eingeführten Kupplungslasche 70 hindurch bewegt werden kann. Auf diese Weise lässt sich das mit dem Kupplungselement 58 versehene Rotorblatt 12 sehr schnell mit der Halterung 32 kuppeln.

Für Fälle, wo überhaupt kein Kupplungselement 58 oder kein Kupplungselement 58 mit einem zum Schraub- oder Endflansch bzw. zum Kranz von axialen Schraubenbolzen, Schraubenbohrungen oder Durchgangsbohrungen am Wurzelende 14 des Rotorblatts 12 passenden Schraubflansch 60 zur Befestigung am Wurzelende 14 verfügbar ist, ist der Trägerring 52 radial auswärts von der Kupplungseinrichtung 56 zusätzlich mit zwei konzentrischen Kränzen von Durchgangsbohrungen 74 versehen, so dass in diesen Fällen das Wurzelende 14 des Rotorblatts 12 direkt mit der Halterung 32 verschraubt werden kann.

Wie am besten in Fig. 1 und 4 dargestellt, besteht die zum Verschwenken der Halterung 32 bzw. des Trägerrings 52 dienende Schwenkeinrichtung 34 aus einem hydraulischen Schwenkzylinder mit großem Durchmesser, der ein gelenkig mit der Trägereinheit 26 verbundenes Zylinderrohr 76 und eine Kolbenstange 78 (Fig. 8) umfasst, die gelenkig mit einem Vorsprung am unteren Rand der Halterung 32 verbunden ist.

Wie in Fig. 1 dargestellt, kann das Rotorblatt 12 nach der Befestigung des Wurzelendes 14 an der Halterung 32 zur Verbesserung der Manövrierfähigkeit des Transportfahrzeugs 10 durch Verschwenken der Halterung 32 in einer vertikalen, d.h. zur Fahrbahnoberfläche 24 senkrechten Längsmittelebene 80 der Trägereinheit 26 aus einer zur Fahrbahnoberfläche 24 parallelen horizontalen Stellung in eine zur Fahrbahnoberfläche 24 schräg geneigte Stellung verschwenkt werden.

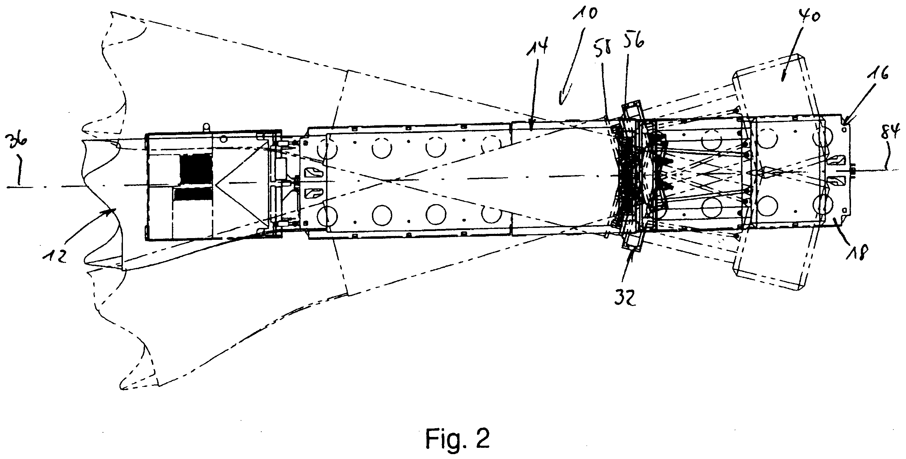

Wie am besten in Fig. 2 dargestellt, kann die Trägereinheit 26 zur Verbesserung der Manövrierfähigkeit auch zusammen mit der Halterung 32 und dem an der Halterung 32 befestigten Rotorblatt 12 um ein begrenztes Maß um die Drehachse 30 des Drehkranzes 28 (in Fig. 2 nicht sichtbar) verschwenkt werden, zum Beispiel zwischen einer in Fig. 2 in durchgezogenen Linien dargestellten Stellung, in der die Längsmittelachse 36 des Rotorblatts 12 in der vertikalen Längsmittelebene 84 des Fahrgestells 16 liegt, und zwei in Fig. 2 in strichpunktierten Linien dargestellten Endstellungen, in denen die Längsmittelachse 36 des Rotorblatts 12 einen spitzen Winkel mit der vertikalen Längsmittelebene 84 des Fahrgestells 16 einschließt und das Rotorblatt 12 nach der einen oder anderen Seite über die Begrenzungen des Fahrgestells 16 auskragt.

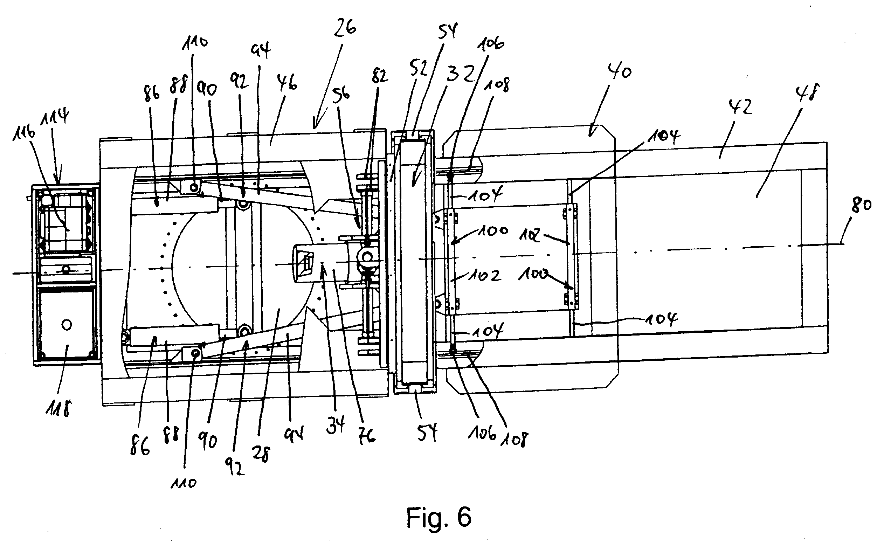

Zum Verschwenken der Trägereinheit 26 in Bezug zum Fahrgestell 16 dienen zwei Hydraulikzylinder 86, die im ersten Rahmenteil 46 angeordnet sind, wie am besten in Fig. 5 und 6 dargestellt. Die beiden Hydraulikzylinder 86 weisen jeweils ein am Rahmen 42 angelenktes Zylinderrohr 88 und eine am Drehkranz 28 angelenkte Kolbenstange 90 auf. Zum Verdrehen des Drehkranzes 28 wird die Kolbenstange 90 eines Zylinders 86 ausgefahren und die Kolbenstange 90 des anderen Zylinders 86 eingezogen.

Das nach oben über den Rahmen 42 überstehende Gegengewicht 40 ist innerhalb des zweiten Rahmenteils 48 parallel zur Längsmittelebene 80 der Trägereinheit 26 verschiebbar, so dass sein Abstand vom Lagerbock 44 und von der Halterung 32 verändert werden kann, wie am besten durch Vergleich der Figuren 1 und 3 bzw. 4 und 5 ersichtlich ist. Dies ermöglich es erstens, das Gegengewicht 40 von der Halterung 32 weg in Richtung des freien Endes des Rahmenteils 48 zu bewegen, um ein ungehindertes Verschwenken der Halterung 32 zu ermöglichen, wie in Fig. 1 dargestellt. Zweitens kann der Abstand des Schwerpunkts des Gegengewichts 40 von der Drehachse 30 des Drehkranzes 28 variiert werden, so dass die bezüglich der Drehachse 30 des Drehkranzes 28 vom Rotorblatt 12 einerseits und vom Gegengewicht 40 andererseits ausgeübten Momente in etwa ausgeglichen werden, um eine einseitige Belastung des Drehkranzes 28 zu verhindern. Drittens kann beim Verschwenken des Rotorblatts 12 um die Fahrzeughochachse 30 (Fig. 2) der gemeinsame Schwerpunkt des Rotorblatts 12, der Trägereinheit 26 und des Gegengewichts 40 in der Mitte des Drehkranzes 28 und damit in der vertikalen Längsmittelebene 84 des Fahrgestells 16 bzw. des Transportfahrzeugs 10 gehalten und auf diese Weise die Kippstabilität des letzteren verbessert werden.

Die Verschiebung des Gegengewichts 40 parallel zu der Längsmittelebene 80 der Trägereinheit 26 erfolgt mit zwei innerhalb des Rahmens 42 angeordneten Hydraulikzylindern 92, deren Zylinderrohre 94 gelenkig mit dem ersten Rahmenteil 48 verbunden sind, während ihre Kolbenstangen 96 gelenkig mit dem Gegengewicht 40 verbunden sind.

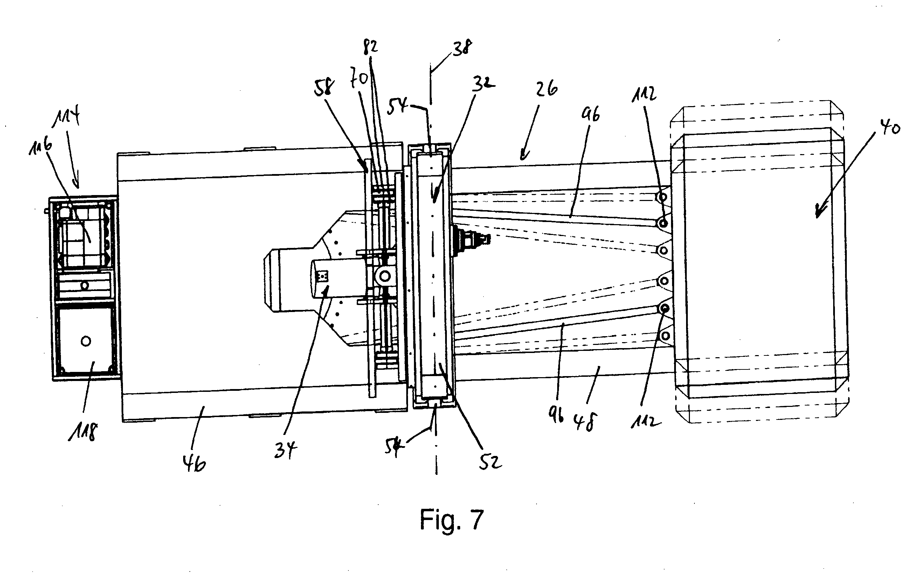

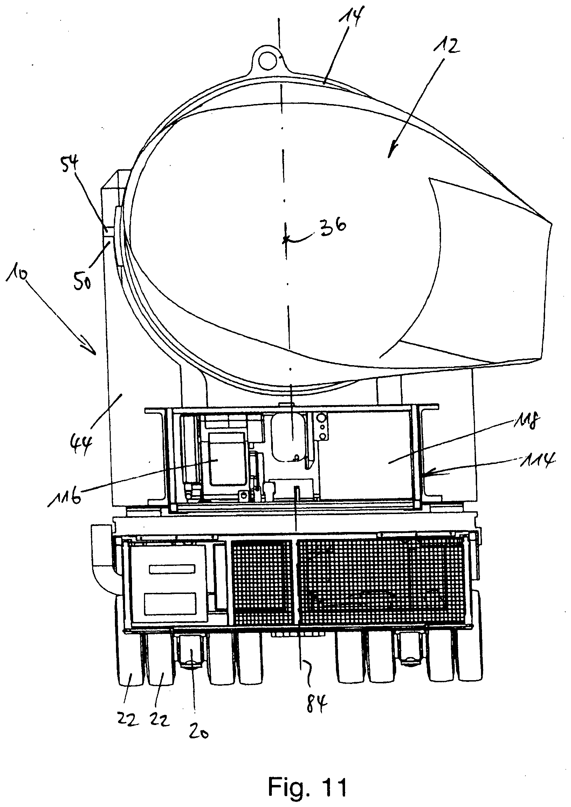

Weiter ist das Gegengewicht 40 auch senkrecht zur vertikalen Längsmittelebene 80 der Trägereinheit 26 verschiebbar, wodurch der Schwerpunkt des Gegengewichts 40 aus der Längsmittelebene 80 heraus nach einer Seite verlagert werden kann, wie in Fig. 7 in strichpunktierten Linien dargestellt. Durch eine solche Verlagerung ist es möglich, eine eventuelle, in seitlicher Richtung aus der Längsmittelachse 36 des Rotorblatts 12 heraus versetzte Schwerpunktslage des Rotorblatts 12 zu kompensieren und den gemeinsamen Schwerpunkt des Rotorblatts 12 und des Gegengewichts 40 in oder nahe der vertikalen Längsmittelebene 84 des Fahrgestells 16 zu positionieren. Wie am besten in Fig. 11 dargestellt, weist das Rotorblatt 12 bei Betrachtung in Richtung seiner Längsmittelachse 36 abgesehen von seinem Wurzelende 14 einen unrunden Querschnitt auf, dessen Schwerpunkt außerhalb der Längsmittelachse 36 liegen kann. Da die Längsmittelachse 36 des an der Halterung 32 befestigten Rotorblatts 12 in der vertikalen Längsmittelebene 84 des Fahrgestells 16 liegt, liegt dann der Schwerpunkt des Rotorblatts 12 auch außerhalb der Längsmittelebene 84.

Zum Verschieben des Gegengewichts 40 in einer zur Längsmittelebene 80 der Trägereinheit 26 senkrechten Richtung dienen ebenfalls zwei Hydraulikzylinder 100. Wie in Fig. 6 dargestellt, handelt es sich bei den Hydraulikzylindern 100 um doppelt wirkende Hydraulikzylinder, deren Zylinderrohre 102 im Abstand voneinander senkrecht zur Längsmittelebene 80 der Trägereinheit 26 ausgerichtet und starr mit dem Gegengewicht 40 verbunden sind. Jeder Zylinder 100 besitzt zwei nach entgegengesetzten Seiten ausfahrbare Kolbenstangen 104, deren Enden jeweils mit einem in einer Führung 108 parallel zur Längsmittelebene 80 der Trägereinheit 26 verschiebbaren Schlitten 106 verbunden sind.

Um die Auslenkung bzw. den Platzbedarf der Hydraulikzylinder 92 im Falle einer seitlichen Verschiebung des Gegengewichts 40 zu minimieren, ist der Abstand der Anlenkpunkte 110 ihrer Zylinderrohre 94 am ersten Rahmenteil 46 größer gewählt als der Abstand der Anlenkpunkte 112 der Kolbenstangen 96 am Gegengewicht 40, so dass die Längsmittelachsen der beiden Hydraulikzylinder 92 in Richtung des zweiten Rahmenteils 48 und des Gegengewichts 40 konvergieren.

Zur Versorgung der Hydraulikzylinder 34, 62, 86, 92 und 100 ist am freien Ende des ersten Teils 46 der Trägereinheit 26 ein Hydraulikaggregat 114 mit einer Hydraulikpumpe 116 und einem Hydrauliktank 118 angeordnet, die durch Hydraulikleitungen (nicht dargestellt) mit den Hydraulikzylindern 34, 62, 86, 92 und 100 verbunden sind.

Die Hydraulikzylinder 92 und die Hydraulikzylinder 100 können dabei unabhängig voneinander mit Hydraulikflüssigkeit gespeist werden, um das Gegengewicht 40 in einer zu einer Achsebene des Fahrgestells 16 bzw. zur Fahrbahnoberfläche 24 parallelen Ebene
wahlweise parallel und/oder senkrecht zur Längsmittelebene 80 der Trägereinheit 26 in eine gewünschte Position zu bringen. Die Verlagerung des Gegengewichts 40 kann auch während der Fahrt erfolgen. Um die Bewegungen des Gegengewichts 40 zu erleichtern, ist das Gegengewicht 40 innerhalb des zweiten Rahmenteils 48 auf Rollen 120 gelagert, wie in Fig. 4 dargestellt.

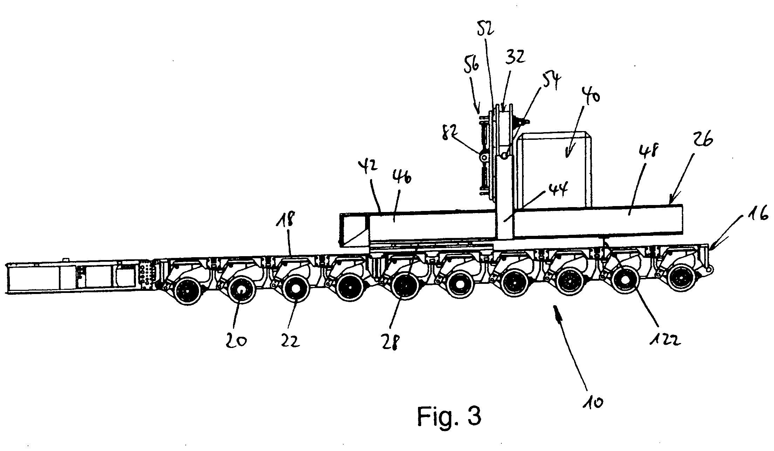

Zur Entlastung des Drehkranzes 28 bei Leerfahrten ist unterhalb des zweiten Rahmenteils 48 auf der Oberseite des Fahrgestells 16 ein Querträger 122 (Fig. 3) angebracht, über den sich der zweite Rahmenteil 48 mit dem Gegengewicht 40 bei Leerfahrten direkt auf dem Fahrgestell 16 abstützen kann, um einen Teil des Gewichts des zweiten Rahmenteils 48 und des Gegengewichts 40 am Drehkranz 28 vorbei in das Fahrgestell 16 einzuleiten. Um eine einseitige Belastung des Drehkranzes 28 bei Leerfahrten des Transportfahrzeugs 10 zu vermeiden, wird darüber hinaus das Gegengewicht 40 so nahe wie möglich an die Halterung 32 heran bewegt, wie in Fig. 3 und 4 dargestellt.

Zusammenfassend kann durch Verschiebung des Gegengewichts 40 beim Transport eines Rotorblatts 12 ungeachtet von dessen Länge und Gewicht und damit von dessen Schwerpunktslage der gemeinsame Schwerpunkt des Rotorblatts 12 und der Trägereinheit 26 etwa auf der Drehachse 30 des Drehkranzes 28 und damit in der vertikalen Längsmittelebene 84 des Fahrgestells 16 positioniert werden.

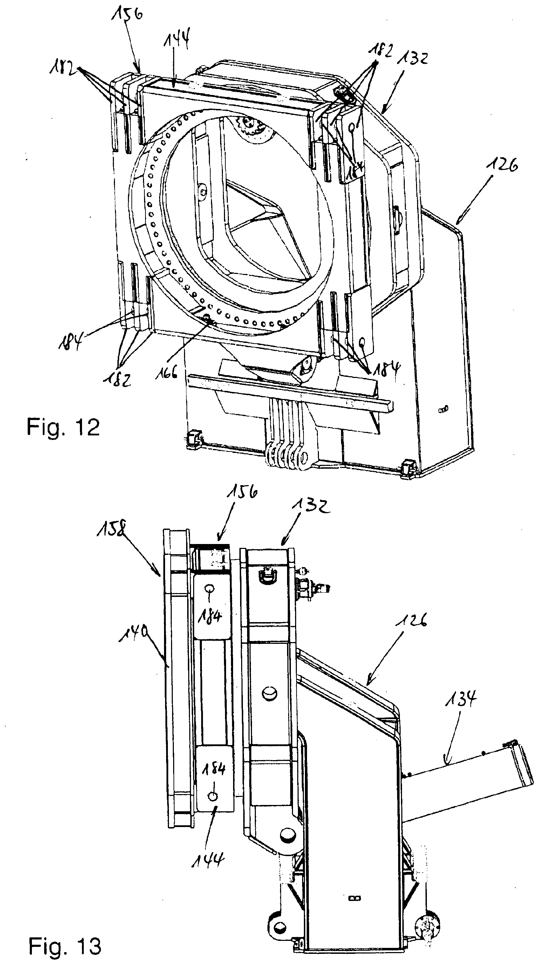

Die in den Figuren 12 und 13 dargestellte Rotorblatthalterung 132 ist ebenfalls mittels einer Schwenkeinrichtung 134 in Form eines Hydraulikzylinders in Bezug zu einer auf dem Fahrgestell (nicht dargestellt) montierten Trägereinheit 126 schwenkbar, die einen nach oben über das Fahrgestell überstehenden vertikalen Lagerbock mit einem Schwenklager (nicht sichtbar) für die Halterung 132 umfasst.

Die Halterung 132 weist ebenfalls eine Kupplungseinrichtung 156 auf, an der sich ein zuvor mit dem Wurzelende des Rotorblatts (nicht dargestellt) verschraubtes Kupplungselement 158 lösbar befestigen lässt.

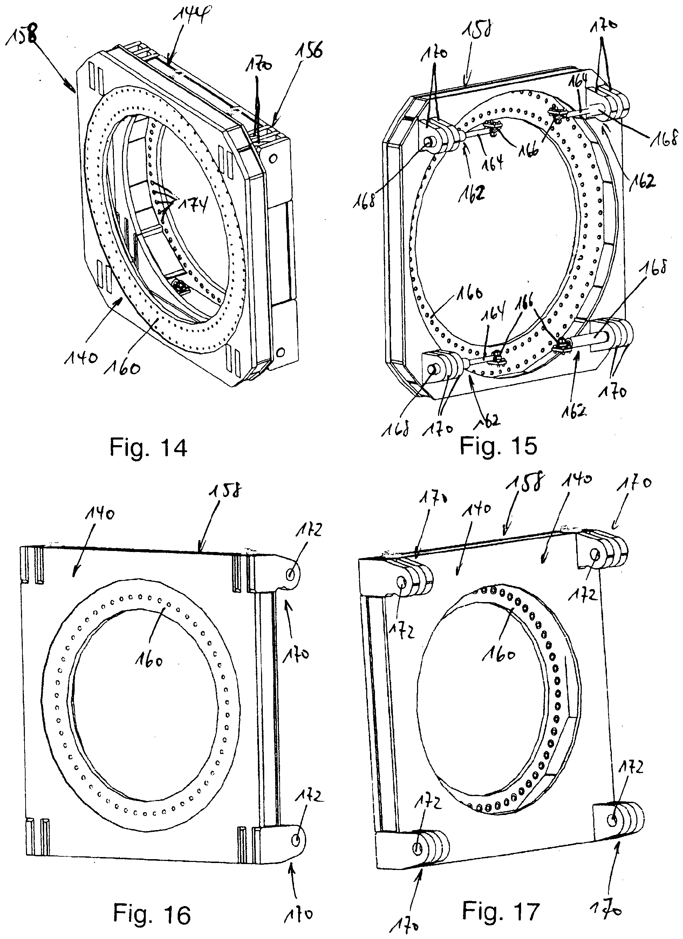

Wie am besten in den Figuren 14 bis 17 dargestellt, weist das Kupplungselement 158 einen Schraubflansch 160 auf, an dem das Wurzelende des Rotorblatts festgeschraubt werden kann. Der Schraubflansch 160 ist dort in der Mitte einer Trägerplatte 140 angeordnet, über deren vom Rotorblatt abgewandte ebene Breitseite an den vier Ecken der Trägerplatte 140 jeweils ein Paar Kupplungslaschen 170 übersteht, die mit der Trägerplatte 140 verschweißt sind. Die Kupplungslaschen 170 der beiden oberen und der beiden unteren Paare von Kupplungslaschen 170 weisen jeweils fluchtende Augen 172 auf.

Wie am besten in den Figuren 12 bis 14 dargestellt, umfasst die an der Halterung 132 angebrachte Kupplungseinrichtung 156 vier parallel ausgerichtete Kupplungszylinder 162, die im Inneren einer doppelwandigen Trägerplatte 144 angeordnet und horizontal ausgerichtet sind. Die Kolbenstangen 164 der Kupplungszylinder 162 sind jeweils an einer Halterung 166 im Inneren der Trägerplatte 144 angelenkt. Die Zylinderrohre 168 der Kupplungszylinder 162 dienen als Kupplungsbolzen und lassen sich entlang der Kolbenstangen 164 durch die fluchtenden Augen 184 von drei Kupplungslaschen 182 ausfahren, die vor jedem Kupplungszylinder 162 in senkrechter Ausrichtung angeordnet und mit der Trägerplatte 144 verschweißt sind. Die benachbarten Kupplungslaschen 182 weisen jeweils einen Abstand auf, der geringfügig größer ist als die Materialstärke von jeder der Kupplungslaschen 170 des Kupplungselements 158. Die Positionen der Kupplungslaschen 182 an den Ecken der Trägerplatte 152 sind so gewählt, dass dort zwischen die drei Kupplungslaschen 182 jeweils zwei Kupplungslaschen 170 des am Wurzelende des Rotorblatts befestigten Kupplungselements 158 einführbar sind, wenn das Rotorblatt mit dem Kupplungselement 158 in einer Lage an die Kupplungseinrichtung 156 angenähert wird, in der die Breitseiten der beiden Trägerplatten 140, 144 parallel zueinander sind und in der die Längsmittelachse des Rotorblatts durch die Mitte eines an der Trägerplatte 144 ausgebildeten Kranzes von Durchgangsbohrungen 174 verläuft.

Sobald die Augen 172 der Kupplungslaschen 170 mit den Augen 184 der Kupplungslaschen 182 fluchten, werden die Zylinderrohre 168 der vier Kupplungszylinder 162 entlang der Kolbenstangen 164 ausgefahren, um sie durch die fluchtenden Augen 172, 184 hindurch zu bewegen und dadurch das mit dem Kupplungselement 158 versehene Rotorblatt mit der Kupplungseinrichtung 156 der Halterung 132 zu kuppeln.

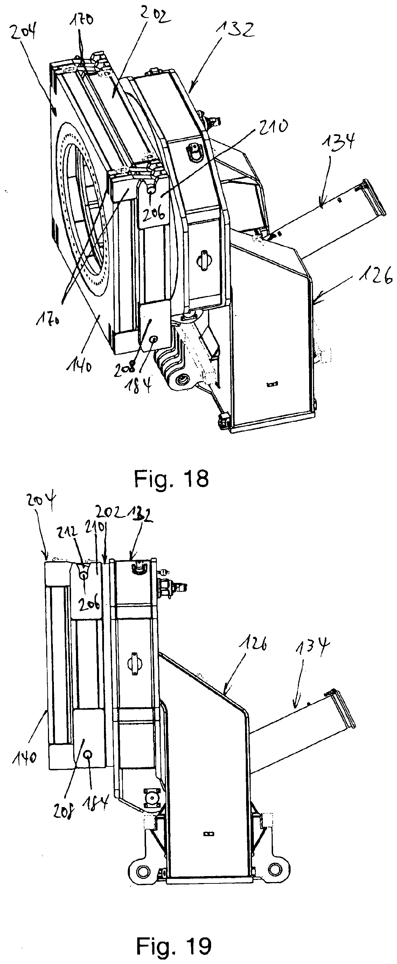

Die in den Figuren 18 und 19 dargestellte Rotorblatthalterung 200 ist ebenfalls mittels einer Schwenkeinrichtung 134 in Form eines Hydraulikzylinders in Bezug zu einer auf dem Fahrgestell (nicht dargestellt) montierten Trägereinheit 126 schwenkbar, die einen nach oben über das Fahrgestell überstehenden vertikalen Lagerbock mit einem Schwenklager (nicht sichtbar) für die Halterung 132 umfasst.

Die Halterung 200 weist ebenfalls eine Kupplungseinrichtung 202 auf, an der sich ein zuvor mit dem Wurzelende 14 des Rotorblatts 12 (nicht dargestellt) verschraubtes Kupplungselement 204 lösbar befestigen lässt.

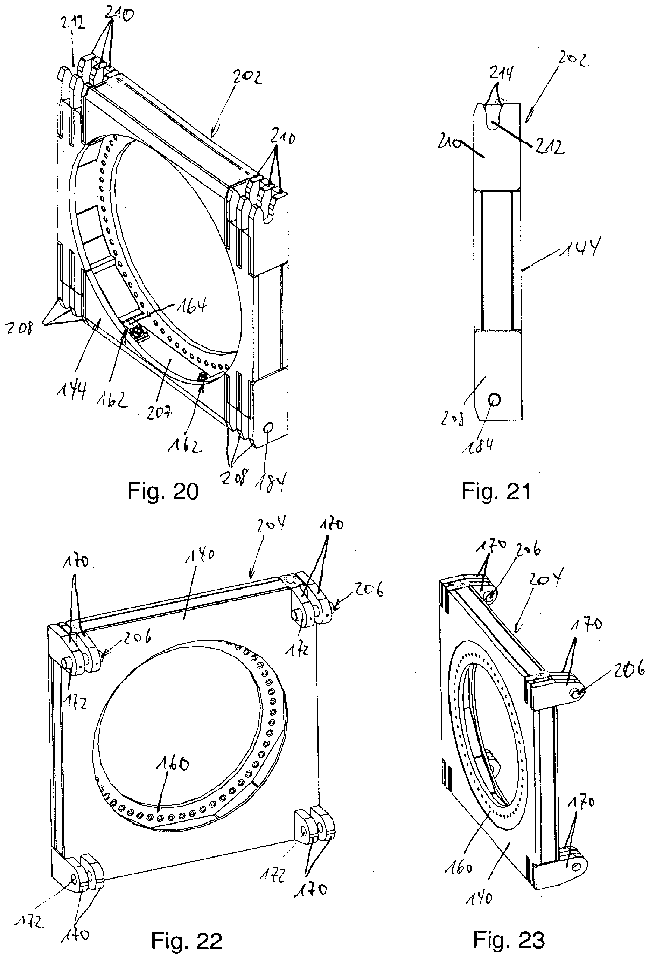

Wie am besten in den Figuren 22 und 23 dargestellt, weist das Kupplungselement 204 einen Schraubflansch 160 auf, an dem das Wurzelende 14 des Rotorblatts 12 festgeschraubt werden kann. Wie bei dem zuvor beschriebenen Kupplungselement 158 ist der Schraubflansch 160 in der Mitte einer Trägerplatte 140 angeordnet, über deren vom Rotorblatt 12 abgewandte ebene Breitseite an den vier Ecken der Trägerplatte 140 jeweils ein Paar Kupplungslaschen 170 übersteht, die mit der Trägerplatte 140 verschweißt sind. Die Kupplungslaschen 170 der beiden oberen und der beiden unteren Paare von Kupplungslaschen 170 weisen jeweils fluchtende Augen 172 auf. Durch die Augen 172 der Kupplungslaschen 170 der beiden oberen Paare erstreckt sich jeweils ein Kupplungsbolzen 206, der den Zwischenraum zwischen den benachbarten Kupplungslaschen 170 überbrückt und dessen Stirnenden nach entgegengesetzten Seiten über die benachbarte Kupplungslasche 170 überstehen. Die Kupplungsbolzen 206 sind in den Augen 172 gesichert, können jedoch bei Verschleiß leicht ausgetauscht werden.

Wie am besten in Fig. 20 dargestellt, umfasst die an der Halterung 132 angebrachte Kupplungseinrichtung 202 zwei parallel ausgerichtete Kupplungszylinder 162, die im Inneren einer doppelwandigen Trägerplatte 144 angeordnet und horizontal ausgerichtet sind. Die Kolbenstangen 164 der Kupplungszylinder 162 sind jeweils an einem Boden 207 der Trägerplatte 144 angelenkt, während die Zylinderrohre als Kupplungsbolzen dienen und sich entlang der Kolbenstangen 164 durch die fluchtenden Augen 184 von jeweils drei an den beiden unteren Ecken der Trägerplatte 144 angeordneten Kupplungslaschen 208 ausfahren lassen, die vor jedem Kupplungszylinder 162 in senkrechter Ausrichtung angeordnet und mit der Trägerplatte 144 verschweißt sind. An den oberen Ecken der Trägerplatte 144 sind ebenfalls jeweils drei Kupplungslaschen 210 angeordnet. Die benachbarten Kupplungslaschen 208, 210 weisen jeweils einen Abstand auf, der geringfügig größer ist als die Materialstärke von jeder der Kupplungslaschen 170 des Kupplungselements 204. Die Positionen der Kupplungslaschen 208, 210 an den Ecken der Trägerplatte 144 sind so gewählt, dass dort zwischen die drei Kupplungslaschen 208, 210 jeweils zwei Kupplungslaschen 170 des am Wurzelende des Rotorblatts 12 befestigten Kupplungselements 204 einführbar sind, wenn das Rotorblatt 14 mit dem Kupplungselement 204 in einer leicht geneigten Ausrichtung, in der das Wurzelende 14 nach unten weist, an die Kupplungseinrichtung 202 angenähert wird.

Anders als bei der zuvor beschriebenen Kupplungsanordnung weisen die Kupplungslaschen 210 an den oberen Ecken der Trägerplatte 144 eine nach oben zu offene Aufnahmevertiefung 212 auf, so dass sich die durch die Augen 172 der oberen Kupplungslaschen 170 des Kupplungselements 204 eingeführten Kupplungsbolzen 206 bei der Annäherung des Kupplungselements 204 an die Kupplungseinrichtung 202 von oben her in die Aufnahmevertiefungen 212 einführen lassen. Um das Einführen zu erleichtern, sind die Aufnahmevertiefungen 212 jeweils mit zwei gegenüberliegenden Einführschrägen 214 versehen, die nach oben zu divergieren. Durch diese Maßnahme ist bei der Annäherung des am Rotorblatt 14 festgeschraubten Kupplungselements 204 an die Kupplungseinrichtung 202 eine geringere Positioniergenauigkeit ausreichend, um die Kupplungsbolzen 206 mit den sechs oberen Kupplungslaschen 210 in Eingriff zu bringen.

Sobald die Kupplungsbolzen 206 ganz in die Aufnahmevertiefungen 212 der sechs oberen Kupplungslaschen 210 eingehängt worden sind, wird das freie Ende des Rotorblatts 12 abgelassen, wobei sich die beiden unteren Paare von Kupplungslaschen 170 des Kupplungselements 204 von selbst zwischen die Kupplungslaschen 208 an den unteren Ecken der Trägerplatte 144 bewegen. Sobald die Trägerplatten 140, 144 gegeneinander anliegen, fluchten die Augen 172 der unteren Kupplungslaschen 170 mit den Augen 184 der unteren Kupplungslaschen 208, woraufhin dass die als Kupplungsbolzen dienenden Zylinderrohre der Kupplungszylinder 162 durch die fluchtenden Augen 172 und 184 hindurch geschoben werden können.

Um die Kupplungsbolzen 206 in den Aufnahmevertiefungen 212 zu sichern, kann noch ein Sicherungsriegel (nicht dargestellt) über den Aufnahmevertiefungen 212 an den Kupplungslaschen 210 festgeschraubt werden.

## Patentansprüche

1. Kupplungsanordnung zum Kuppeln eines mit Schraubenbolzen, Schraubenbohrungen und/oder Durchgangsbohrungen versehenen Endes (14) eines länglichen Objekts (12) mit einem Schwerlast-Transportfahrzeug (10), mit einem mit dem Ende (14) des länglichen Objekts (12) verschraubbaren Kupplungselement (58; 158; 204) und einer am Schwerlast-Transportfahrzeug (10) angebrachten, lösbar mit dem Kupplungselement (58; 158; 204) kuppelbaren Kupplungseinrichtung (56; 156; 202), wobei die Kupplungseinrichtung (56; 156; 202) eine Mehrzahl von beweglichen Kupplungsbolzen umfasst, die sich nach einer gegenseitigen Annäherung des Kupplungselements (58; 158; 204) und der Kupplungseinrichtung (56; 156; 202) formschlüssig durch Augen (72; 172, 184) des Kupplungselements (58; 158; 204) und der Kupplungseinrichtung (56; 156; 202) hindurch bewegen lassen, wobei das Kupplungselement (58; 158; 204) einen mit dem Ende (14) des länglichen Objekts (12) verschraubbaren Schraubflansch (60; 160) und mehrere starr mit dem Schraubflansch (60; 160) verbundene Vorsprünge (70; 170) umfasst, in denen jeweils eines der Augen (172) angeordnet ist, wobei die Kupplungseinrichtung (56; 156; 202) mehrere auf die Kupplungsbolzen einwirkende Stellorgane umfasst.

2. Kupplungsanordnung nach Anspruch 1, **dadurch gekennzeichnet, dass** die Stellorgane Kupplungszylinder (62; 162) sind, deren Zylinderrohre (66; 168) oder Kolbenstangen (64; 164) jeweils starr mit einem der Kupplungsbolzen verbunden sind oder einen Kupplungsbolzen bilden.

3. Kupplungsanordnung nach einem der vorangehenden Ansprüche, **dadurch gekennzeichnet, dass** die Vorsprünge (70; 170) über eine vom länglichen Objekt (12) abgewandte Breitseite des Schraubflanschs (60) oder einer starr mit dem Schraubflansch (160) versehenen Trägerplatte (140) überstehen.

4. Kupplungsanordnung nach einem der vorangehenden Ansprüche, **dadurch gekennzeichnet, dass** die Augen (72) in Winkelabständen um eine Längsmittelachse (36) des länglichen Objekts (12) herum angeordnet sind.

5. Kupplungsanordnung nach einem der vorangehenden Ansprüche, **dadurch gekennzeichnet, dass** die Kupplungseinrichtung (56; 156; 202) eine Mehrzahl von Vorsprüngen oder Kupplungslaschen (82; 182; 208, 210) aufweist, und dass sich bei der gegenseitigen Annäherung des Kupplungselements (58; 158; 204) und der Kupplungseinrichtung (56; 156; 202) jeweils Vorsprünge (70; 170) des Kupplungselements (58; 158; 204) zwischen benachbarte Vorsprünge oder Kupplungslaschen (82; 182; 208, 210) der Kupplungseinrichtung (56; 156; 202) einführen lassen.

6. Kupplungsanordnung nach Anspruch 5, **dadurch gekennzeichnet, dass** mindestens ein Teil der Vorsprünge oder Kupplungslaschen (82; 182; 208, 210) ein Auge (72; 184) aufweist, und dass sich mindestens ein Teil der Kupplungsbolzen nach dem Kuppeln jeweils durch die Augen (72; 184) von zwei Vorsprüngen oder Kupplungslaschen (82; 182; 208) der Kupplungseinrichtung (56; 156; 202) und durch das Auge (172) von mindestens einem Vorsprung (70; 170) des Kupplungselements (58; 158; 204) erstrecken.

7. Kupplungsanordnung nach Anspruch 5 oder 6, **dadurch gekennzeichnet, dass** die Vorsprünge oder Kupplungslaschen (82; 182; 208, 210) starr an einer Halterung (32; 132) befestigt sind, die zusammen mit dem länglichen Objekt (12) in Bezug zu einem Fahrgestell (16) des Schwerlast-Transportfahrzeugs (10) verschwenkbar ist.

8. Kupplungsanordnung nach Anspruch 7, **dadurch gekennzeichnet, dass** die Halterung (32; 132) radial auswärts oder radial einwärts von der Kupplungseinrichtung (56; 156; 202) mindestens einen Kranz von Durchgangsbohrungen (74; 174) aufweist.

9. Kupplungsanordnung nach einem der Ansprüche 5 bis 8, **dadurch gekennzeichnet, dass** ein Teil der Vorsprünge oder Kupplungslaschen (210) zum Einführen eines Kupplungsbolzens (206) eine randoffene Aufnahmevertiefung (212) mit divergierenden Begrenzungsflächen (214) aufweist.

10. Kupplungsanordnung nach einem der vorangehenden Ansprüche, **dadurch gekennzeichnet, dass** das längliche Objekt (12) ein Rotorblatt einer Windkraftanlage ist.

11. Schwerlast-Transportfahrzeug (10) zum Transport eines länglichen Objekts (12), mit einem Fahrgestell (16) und mit einer Halterung (32; 132) zur Befestigung eines mit Schraubenbolzen, Schraubenbohrungen und/oder Durchgangsbohrungen versehenen Endes (14) des länglichen Objekts (12), **gekennzeichnet durch** eine Kupplungsanordnung nach einem der vorangehenden Ansprüche.

12. Schwerlast-Transportfahrzeug (10) nach Anspruch 11, **gekennzeichnet durch** eine Schwenkeinrichtung (34; 134) zum Verschwenken der Halterung (32; 132), der Kupplungseinrichtung (56; 156; 202), des Kupplungselements (58; 158; 204) und des länglichen Objekts (12) in Bezug zum Fahrgestell (16).

13. Schwerlast-Transportfahrzeug (10) nach Anspruch 11 oder 12, **gekennzeichnet durch** ein Gegengewicht (40) auf der vom länglichen Objekt (12) abgewandten Seite der Halterung (32).

14. Schwerlast-Transportfahrzeug (10) nach Anspruch 13, **dadurch gekennzeichnet, dass** das Gegengewicht (40) in Bezug zur Halterung (32) beweglich ist.

## Claims

1. Coupling assembly for coupling an end (14) of an elongated object (12) having screw bolts, screw bores and/or through holes with a heavy load transport vehicle (10), comprising a coupling element (58; 158; 204), which can be screwed to the end (14) of the elongated object (12), and a coupling device (56; 156; 202), which can be coupled detachably with the coupling element (58; 158; 204), wherein the coupling device (56; 156; 202) comprises a number of movable coupling bolts, which, after the coupling element (58; 158; 204) and the coupling device (56; 156; 202) have mutually approached each other, can be moved form-fit through eyes (72; 172; 184) of the coupling element (58; 158; 204) and the coupling device (56; 156, 202), wherein the coupling element (58; 158; 204) comprises a screw flange (60; 160), which can be screwed with the end (14) of the elongated object (12), and several projections (70; 170) being rigidly connected with the screw flange (60; 160), in each of which one of the eyes (172) is arranged, wherein the coupling device (56; 156; 202) comprises several actuating members acting on the coupling bolts.

2. Coupling arrangement according to claim 1, **characterized in that** the actuating members are coupling cylinders (62; 162), whose cylinder tubes (66; 168) or piston rods (64; 164) are rigidly connected with one of the coupling bolts or form a coupling bolt.

3. Coupling arrangement according to one of the previous claims, **characterized in that** the projections (70; 170) project beyond a broad side of the screw flange (60) facing away from the elongated object (12) or a carrier plate (140) rigidly provided with the screw flange (160).

4. Coupling arrangement according to one of the previous claims, **characterized in that** the eyes (72) are arranged at angular intervals around the longitudinal central axis (36) of the elongated object (12).

5. Coupling arrangement according to one of the previous claims, **characterized in that** the coupling device (56; 156; 202) comprises a plurality of projections or coupling tabs (82; 182; 208; 210), and that upon mutual approach of the coupling element (58; 158; 204) and the coupling device (56; 156; 202) projections (70; 170) of the coupling element (58; 158; 204) can be inserted between adjacent projections or coupling tabs (82; 182; 208; 210) of the coupling device (56; 156; 202).

6. Coupling arrangement according to claim 5, **characterized in that** at least a part of the projections or coupling tabs (82; 182; 208, 210) comprise an eye (72; 184), and that at least a part of the coupling bolts extend, after coupling, through the eyes (72; 184) of two projections or coupling tabs (82; 182; 208) of the coupling device (56; 156; 202) and through the eye (172) of at least one projection (70; 170) of the coupling element (58; 158; 204).

7. Coupling arrangement according to claim 5 or 6, **characterized in that** the projections or coupling tabs (82; 182; 208, 210) are mounted rigidly secured to a mounting (32; 132), which can be pivoted together with the elongated object (12) relative to a chassis (16) of the heavy load transport vehicle (10).

8. Coupling arrangement according to claim 7, **characterized in that** the mounting (32; 132) comprises at least one ring of through holes (74; 174) extending radially outwardly or radially inwardly from the coupling device (56; 156; 202).

9. Coupling arrangement according to one of the claims 5 to 8, **characterized in that** a part of the projections or coupling tabs (210) comprises a receiving recess open at the edge and having diverging boundary surfaces (214) for inserting a coupling bolt (206).

10. Coupling arrangement according to one of the previous claims, **characterized in that** the elongated object (12) is a rotor blade of a wind turbine.

11. Heavy duty transport vehicle (10) for transporting an elongated object (12), having a chassis (16) and a mounting (32; 132) for securing an end (14) of the elongated object (12) having screw bolts, screw bores and/or through holes, **characterized by** a coupling arrangement according to one of the previous claims.

12. Heavy duty transport vehicle (10) according to claim 11, **characterized by** a pivoting device (34; 134) for pivoting the mounting (32; 132) of the coupling device (56; 156; 202), the coupling element (58; 158; 204) and the elongated object (12) relative to a chassis (16).

13. Heavy duty transport vehicle (10) according to claim 11 or 12, **characterized by** a counterweight (40) on a side remote from the elongated object (12) of the support (32).

14. Heavy duty transport vehicle (10) according to claim 13, **characterized in that** the counter weight (40) is movable in relation to the support (32).

## Revendications

1. Agencement de couplage pour le couplage d'une extrémité (14) pourvue de boulons filetés, perçages de vis et/ou perçages débouchants d'un objet oblong (12) avec un poids-lourd (10), avec un élément de couplage (58 ; 158 ; 204) pouvant être vissé à l'extrémité (14) de l'objet oblong (12) et un dispositif de couplage (56 ; 156 ; 202) pouvant être couplé de manière détachable à l'élément de couplage (58 ; 158 ; 204), monté sur le poids-lourd (10), dans lequel le dispositif de couplage (56 ; 156 ; 202) comporte une pluralité de boulons de couplage mobiles, qui se laissent déplacer après une approche mutuelle de l'élément de couplage (58 ; 158 ; 204) et du dispositif de couplage (56 ; 156 ; 202) par complémentarité de formes au travers d'oeillets (72 ; 172, 184) de l'élément de couplage (58 ; 158 ; 204) et du dispositif de couplage (56 ; 156 ; 202), dans lequel l'élément de couplage (58 ; 158 ; 204) comporte une bride à vis (60 ; 160), pouvant être vissée à l'extrémité (14) de l'objet oblong (12), et plusieurs saillies (70 ; 170) reliées rigidement à la bride à vis (60 ; 160), dans lesquelles respectivement un des oeillets (172) est agencé, dans lequel le dispositif de couplage (56 ; 156 ; 202) comporte plusieurs organes de réglage agissant sur le boulon de couplage.

2. Agencement de couplage selon la revendication 1, **caractérisé en ce que** les organes de réglage sont des cylindres de couplage (62 ; 162) dont les tubes de cylindre (66 ; 168) ou tiges de piston (64 ; 164) sont relié(e)s respectivement rigidement à un des boulons de couplage ou forment un boulon de couplage.

3. Agencement de couplage selon l'une quelconque des revendications précédentes, **caractérisé en ce que** les saillies (70 ; 170) dépassent d'un côté large éloigné de l'objet oblong (12) de la bride à vis (60) ou d'une plaque porteuse (140) pourvue rigidement de la bride à vis (160) .

4. Agencement de couplage selon l'une quelconque des revendications précédentes, **caractérisé en ce que** les oeillets (72) sont agencés à des distances angulaires autour d'un axe médian longitudinal (36) de l'objet oblong (12).

5. Agencement de couplage selon l'une quelconque des revendications précédentes, **caractérisé en ce que** le dispositif de couplage (56 ; 156 ; 202) présente une pluralité de saillies ou languettes de couplage (82 ; 182 ; 208, 210), et **en ce que** lors de l'approche mutuelle de l'élément de couplage (58 ; 158 ; 204) et du dispositif de couplage (56 ; 156 ; 202) respectivement des saillies (70 ; 170) de l'élément de couplage (58 ; 158 ; 204) se laissent introduire entre des saillies ou languettes de couplage contiguës (82 ; 182 ; 208, 210) du dispositif de couplage (56 ; 156 ; 202).

6. Agencement de couplage selon la revendication 5, **caractérisé en ce qu'**au moins une partie des saillies ou languettes de couplage (82 ; 182 ; 208, 210) présente un oeillet (72 ; 184) et **en ce qu'**au moins une partie du boulon de couplage s'étend après le couplage respectivement au travers des oeillets (72 ; 184) de deux saillies ou languettes de couplage (82 ; 182 ; 208) du dispositif de couplage (56 ; 156 ; 202) et au travers de l'oeillet (172) d'au moins une saillie (70 ; 170) de l'élément de couplage (58 ; 158 ; 204).

7. Agencement de couplage selon la revendication 5 ou 6, **caractérisé en ce que** les saillies ou languettes de couplage (82 ; 182 ; 208, 210) sont fixées rigidement sur un support (32 ; 132) qui peut être pivoté conjointement avec l'objet oblong (12) par rapport à un châssis (16) du poids-lourd (10).

8. Agencement de couplage selon la revendication 7, **caractérisé en ce que** le support (32 ; 132) présente radialement vers l'extérieur ou radialement vers l'intérieur du dispositif de couplage (56 ; 156 ; 202) au moins une couronne de perçages débouchants (74 ; 174).

9. Agencement de couplage selon l'une quelconque des revendications 5 à 8, **caractérisé en ce qu'**une partie des saillies ou languettes de couplage (210) présente pour l'introduction d'un boulon de couplage (206) une cavité de réception (212) à bord ouvert avec des surfaces de délimitation (214) divergentes.

10. Agencement de couplage selon l'une quelconque des revendications précédentes, **caractérisé en ce que** l'objet oblong (12) est une pale de rotor d'éolienne.

11. Poids-lourd (10) pour le transport d'un objet oblong (12), avec un châssis (16) et avec un support (32 ; 132) pour la fixation d'une extrémité (14) pourvue de boulons filetés, perçages de vis et/ou perçages débouchants de l'objet oblong (12), **caractérisé par** un agencement de couplage selon l'une des revendications précédentes.

12. Poids-lourd (10) selon la revendication 11, **caractérisé par** un dispositif de pivotement (34 ; 134) pour le pivotement du support (32 ; 132), du dispositif de couplage (56 ; 156 ; 202), de l'élément de couplage (58 ; 158 ; 204) et de l'objet oblong (12) par rapport au châssis (16).

13. Poids-lourd (10) selon la revendication 11 ou 12, **caractérisé par** un contrepoids (40) sur le côté éloigné de l'objet oblong (12) du support (32).

14. Poids-lourd (10) selon la revendication 13, **caractérisé en ce que** le contrepoids (40) est mobile par rapport au support (32).
